# EUROPEAN PATENT APPLICATION

(11) **EP 2 346 192 A1**
(43) Date of publication of application: **20.07.2011**
(21) Application number: 10162678.6
(22) Date of filing: 12.05.2010
(51) Int. Cl.: H04H 20/18, H04N 7/24

(54) **Apparatus and method for receiving signal**

(30) Priority: 30.11.2009 KR 20090116847
(71) Applicant: Electronics and Telecommunications Research Institute, Daejeon 305-350 (KR)
(72) Inventor: Bae, Byungjun, 302-777 Daejeon (KR); Lee, Ji Bong, 616-763 Busan (KR); Lim, Jong Soo, 301-831 Daejeon (KR); Yang, Kyu Tae, 305-729 Daejeon (KR); Song, Yun Jeong, 305-759 Daejeon (KR); Lee, Soo In, 302-120 Daejeon (KR)
(74) Representative: Betten & Resch

(57) **Abstract**

Broadcasting signals transmitted from a signal transmitting apparatus are demodulated into first main service channel data and first fast information channel data, and a hierarchical modulation mode value is extracted by analyzing the first fast information channel data. The broadcasting signals are demodulated into second main service channel data and second fast information channel data using the hierarchical modulation mode value, and then the fast information channel data information is extracted from the second fast information channel data. After the service channel data of the base layer and the service channel data of the enhancement layer that are output from the second fast information channel data are demultiplexed using the fast information channel data information to generate the plurality of broadcasting services, one of the plurality of generated broadcasting services is selected and reproduced as a broadcasting program.

## Description

### BACKGROUND OF THE INVENTION

### (a) Field of the Invention

The present invention relates to a signal receiving apparatus and method.

### (b) Description of the Related Art

A next generation advanced terrestrial digital multimedia broadcast (AT-DMB) is a system that increase transmission capacity using a hierarchical modulation mechanism based on an existing T-DMB. Therefore, the basic target of the AT-DMB is to accurately support backward compatibility with a T-DMB. In other words, the transmission channel of the AT-DMB is divided into a base layer and an enhancement layer, wherein the base layer is a channel that transmits a T-DMB signal and the enhancement layer is a channel that is added in the AT-DMB. As described above, since the T-DMB signal and the AT-DMB signal are used in one transmission channel, there is a need to accurately support the backward compatibility.

In the AT-DMB, in order to differentiate the AT-DMB signal from the existing T-DMB signal, when an AT-DMB transmitter inserts and transmits signaling information that informs of the AT-DMB broadcasting, a receiving terminal that receives a signal recognizes the signaling information to recognize that there is an AT-DMB signal. That is, the AT-DMB related signaling information is defined in a field period in a fast information channel (FIC) that is not used in the T-DMB, and is transmitted to an FIC of the base layer. Therefore, since the existing T-DMB receiving terminal does not recognize this, it receives only the T-DMB signal, and the AT-DMB receiving terminal recognizes this and performs a demodulating process thereon and then receives AT-DMB broadcasting.

The above-mentioned method inserts the AT-DMB signaling information into a signal of a base layer corresponding to the T-DMB, which cannot be considered as the same signal as the existing T-DMB signal, Therefore, the basic target for the AT-DMB system to provide the complete backward compatibility of the T-DMB system cannot be achieved. Therefore, when the T-DMB and the AT-DMB use the same frequency band, since there is a difference between the FIC in the T-DMB and the fast information channel of the basic region of the AT-DMB, an interference problem occurs in the receiving terminal.

In addition, even when the broadcasting network only for the AT-DMB is configured, it is difficult for each area broadcasting station to share a multiplexed ensemble frame produced in a main broadcasting station. Therefore, in order for the AT-DMB to provide the complete backward compatibility to the T-DMB, the base layer of the AT-DMB corresponding to the T-DMB should be provided to be exactly the same as the T-DMB signal. At the same time, a need exists for a solution that does not cause AT-DMB signal receiving performance deterioration.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a signal receive apparatus and method capable of receiving an AT-DMB signal without signaling information on a base layer.

In order to achieve the technical problem, a signal receiving apparatus according to an embodiment of the present invention includes:
a demodulator that demodulates broadcasting signals transmitted from a signal transmitting apparatus and separates and outputs them into first main service channel data and first fast information channel data, and demodulates the broadcasting signals again based on a hierarchical modulation mode value extracted from first fast information channel data and separates and outputs them into second main service channel data and second fast information channel data; a fast information channel data signal processor that processes the first fast information channel data output from the demodulator and outputs the fast information channel data of a first layer and the fast information channel data of a second layer; and an extractor that extracts a hierarchical modulation mode value from the fast information channel data of the second layer output from the signal processor and transmits it to the demodulator.

In order to solve the technical problem, a signal receiving method according to another embodiment of the present invention includes:
demodulating a broadcasting signal transmitted from a signal transmitting apparatus as first main service channel data and first fast information channel data; extracting a hierarchical modulation mode value by analyzing the first fast information channel data; demodulating the broadcasting signal into the second main service channel data and the second fast information channel data by using the hierarchical modulation mode value; extracting fast information channel data information from the second fast information channel data; generating a plurality of broadcasting services by demultiplexing the service channel data of the base layer and the service channel data of the enhancement layer output from the second fast information channel data using the fast information channel data information; and selecting one of the plurality of generated broadcasting services and reproducing it as a broadcasting program.

### BRIEF DESCRIPTION OF THE DRAWINGS

FIG. 1 shows a multiplexer of a signal transmitting apparatus according to an exemplary embodiment of the present invention;
FIG. 2 is a configuration diagram showing a signal receiving apparatus according to an exemplary embodiment of the present invention; and
FIG. 3 is a flowchart of reproducing the received signal according to the exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In the specification, unless explicitly described to the contrary, the word "comprise" and variations such as "comprises" or "comprising" will be understood to imply the inclusion of stated elements but not the exclusion of any other elements.

AT-DMB signaling information includes a hierarchical modulation mode value and an AT-DMB mode value. The AT-DMB mode includes a B mode that performs hierarchical modulation on a T-DMB by using binary phase shift keying (BPSK) and a Q mode that performs hierarchical modulation on the T-DMB by using quadrature phase shift keying (QPSK).

Since each of the B mode and the Q mode defines the reception in a moving state and a fixed state of the signal receiving apparatus, they are highly likely to be determined according to the signal receiving apparatus. In other words, a terminal type and a navigation type that view a small screen in the state where the receiving terminal, which is a signal receiving apparatus, is moving is mainly used as a B mode terminal and a Q mode terminal is mainly used at places such as a home, a building, etc. Therefore, since the AT-DMB service type or the corresponding terminal mode are determined, the AT-DMB mode value is substantially degraded in effectiveness.

A hierarchical modulation mode value indicates a hierarchical modulation degree of the T-DMB. When the hierarchical modulation mode value is large, the quality of a base layer signal is good and the quality of an enhancement layer signal is poor. On the other hand, when the hierarchical modulation mode value is small, the quality of the base layer signal is poor and the quality of the enhancement layer signal is good. In fact, even if the signal receiving apparatus does not know the hierarchical modulation mode value, it can receive the AT-DMB signal but degrades the signal receiving performance.

Therefore, since an exemplary embodiment of the present invention does not transmit the AT-DMB signaling information to a base layer, it provides backward compatibility with the T-DMB and transmits only the hierarchical modulation mode value to the enhancement layer. As a result, a signal receiving apparatus and method that first receives the AT-DMB signal through coarse demodulation in the signal receiving apparatus, extracts the hierarchical modulation mode value in the enhancement layer received by the signal receiving apparatus, and performs fine hierarchical modulation based thereon to increase the AT-DMB receiving performance is proposed.

Hereinafter, the signal transmitting/receiving apparatus according to the exemplary embodiment of the present invention and the signal reproducing method using the same will be described with reference to the accompanying drawings.

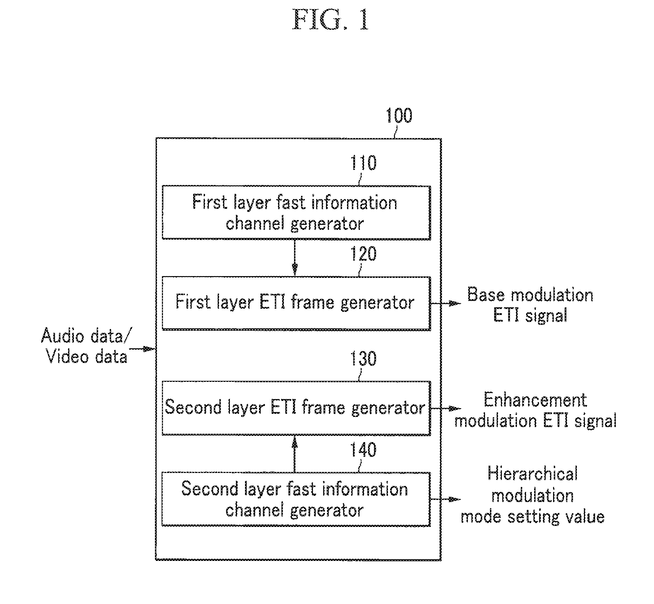

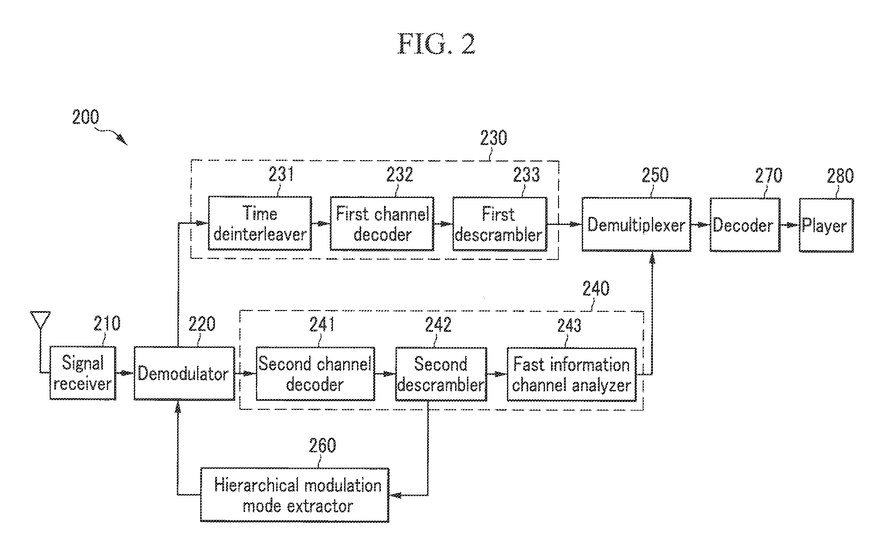

FIG. 1 shows a multiplexer of a signal transmitting apparatus according to an exemplary embodiment of the present invention, and FIG. 2 is a configuration diagram showing a signal receiving apparatus according to an exemplary embodiment of the present invention.

First, as shown in FIG. 1, a multiplexer of a signal transmitting apparatus 100, which transmits an RF broadcasting signal, according to an exemplary embodiment of the present invention includes a first layer fast information channel (FIC) generator 110, a first layer ensemble transport interface (ETI) frame generator 120, a second layer ETI frame generator 130, and a second layer fast information channel generator 140.

In general, the AT-DMB hierarchical modulation mode value is defined in a base layer fast information channel in the base layer ETI frame, but the exemplary embodiment of the present invention defines the hierarchical modulation mode value and inserts it into an enhancement layer fast information channel in the enhancement layer ETI frame to provide the complete backward compatibility with the T-DMB. For convenience of explanation, the base layer will be described as a first layer and the enhancement layer will be described as a second layer.

The first layer FIC generator 110 generates the fast information channel of the base layer and transmits it to the first layer ETI frame generator 120. The first layer ETI frame generator 120 generates the first layer ETI frame based on various video data or audio data that are received and encoded from the outside and the fast information channel generated outside to output the basic modulation ETI signal.

Similarly, the second layer fast information channel generator 140 generates the fast information channel of the enhancement layer and transmits it to the second layer ETI frame generator 130. At this time, it also transmits the set hierarchical modulation mode value, which is set from the outside, to the second layer ETI frame generator 130.

The second layer ETI frame generator 130 generates the second layer ETI frame based on the various video data or audio data that are received and encoded from the outside and the fast information channel generated internally to output the enhancement modulation ETI signal. At this time, the mode value defining the hierarchical modulation mode is defined in the enhancement layer fast information channel in the second layer ETI frame and is inserted into the second layer fast information channel in the second layer ETI frame.

The hierarchical modulation mode value included in the enhancement modulation ETI signal needs to perform fine demodulation for each hierarchical modulation mode in the signal receiving apparatus. At this time, the base modulation ETI signal and the enhancement modulation ETI signal are referred to as an RF broadcasting signal.

Next, as shown in FIG. 2, a signal receiving apparatus 200 according to an exemplary embodiment of the present invention includes a signal receiver 210, a demodulator 220, a main service channel data signal processor (hereinafter, for convenience of explanation, referred to as a first signal processor) 230, a fast information channel data signal processor (hereinafter, for convenience of explanation, referred to as a second signal processor) 240, a demultiplexer 250, a hierarchical modulation mode extractor 260, a decoder 270, and a player 280. The first signal processor 230 includes a time deinterleaver 231, a first channel decoder 232, and a first descrambler 233, and the second signal processor 240 includes a second channel decoder 241, a second descrambler 242, and a fast information channel data analyzer 243.

The B mode or Q mode only signal transmitting apparatus 100 for fine tuning the AT-DMB signal performs the demodulation determined according to each mode. For backward compatibility with the T-DMB, only the hierarchical modulation mode value is transmitted through the second layer that is the enhancement layer without transmitting the AT-DMB signaling information to a signal receiving apparatus 200 through the fast information channel of the base layer that is the first layer. At this time, the hierarchical modulation mode value may define and transmit a new field, and it may be transmitted in a reserved area in an existing field.

The signal receiver 210 receives the RF broadcasting signal transmitted from the AT-DMB transmitting apparatus through an antenna and down-converts it into a baseband signal and outputs it.

The demodulator 220 demodulates the down-converted broadcasting signal in the signal receiver 210 and separates it into main service channel (MSC) data and fast information channel data, respectively. At this time, the main service channel data and the fast information channel data are data that correspond to the case where the data of the base layer and the enhancement layer are not separated. The main service channel data are transmitted to the first signal processor 230, and the fast information channel data are transmitted to the second signal processor 240.

In addition, the demodulator 220 receives a hierarchical modulation mode value that is extracted from a hierarchical modulation mode extractor 260 signal and demodulates the broadcasting signal down-converted in the signal receiver 210 once more, thereby obtaining more accurate main service channel data and fast information channel data. In the exemplary embodiment of the present invention, data generated by demodulating the broadcasting signal that is first down-converted in the signal receiver 210 are referred to as the first main service channel data and the first fast information channel data, respectively, and data generated by demodulating the broadcasting signal once more using the hierarchical modulation mode value are referred to as the second main service channel data and the second fast information channel data, respectively.

The first fast information channel data output from the demodulator 220 are first input to the second signal processor 240, and the original fast information channel data are primarily obtained through the second signal processor 240.

In other words, the second channel decoder 241 channel-decodes the first fast information channel data output from the demodulator 220 and the second descrambler 242 descrambles the first fast information channel data decoded in the second channel decoder 241. The fast information channel data of the original base layer and the fast information channel data of the enhancement layer are obtained through the second channel decoder 241 by performing the above-mentioned process.

The fast information channel data analyzer 243 analyzes the fast information channel data of the base layer and the fast information channel data of the enhancement layer, respectively, which are output from the second descrambler 242, to generate the fast information channel data information and output it to the demultiplexer 250.

Meanwhile, the hierarchical modulation mode extractor 260 analyzes the fast information channel data of the enhancement layer output from the second descrambler 242 to extract the hierarchical modulation mode value. The hierarchical modulation mode extractor 260 transmits the extracted hierarchical modulation mode value to the demodulator 220 to perform the accurate demodulation function in the demodulator 220 based on the hierarchical modulation mode value, thereby making it possible to obtain the second main service channel data and the second fast information channel data.

The time deinterleaver 231 of the first signal processor 230 receives the second main service channel data that are separated in the demodulator 220 to perform time deinterleaving. The first channel decoder 232 channel-decodes the second main service channel data output from the time deinterleaver 231 and outputs it.

The time deinterleaver 231 of the first descrambler 233 receives the second main service channel data that are separated in the demodulator 220 and performs the deinterleaving thereon. The first channel decoder 232 channel-decodes the second main service channel data, which is subjected to the time deinterleaving and is output from the time deinterleaver 231, and outputs it to the service channel data of the base layer and the service channel data of the enhancement layer.

The first descrambler 233 descrambles the channel-decoded service channel data of the base layer and service channel data of the enhancement layer that are output from the first channel decoder 232, and outputs it to the demultiplexer 250.

The demultiplexer 250 demultiplexes the main service channel data of the base layer and the main service channel data of the enhancement layer into the service data, respectively, in which several services output from the first descrambler 233 are multiplexed, based on the fast information channel data information output from the fast information channel data analyzer 243. When the broadcasting signal is determined by the selection of a viewer, one of service data is selected based on the selection information of the determined service and then output to the decoder 270.

The decoder 270 decodes and outputs the service data output from the demultiplexer 250, and the player 280 reproduces, as the broadcasting program, the service data that are decoded and output from the decoder 270 and outputs it.

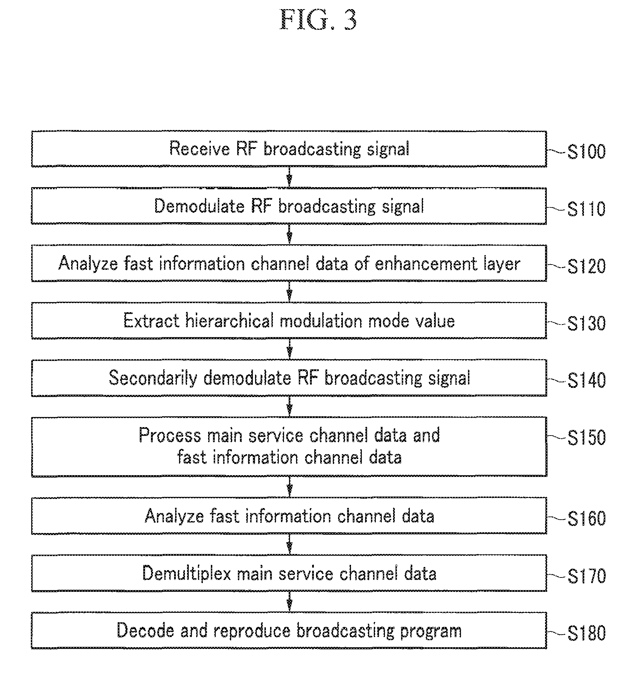

Next, a process of reproducing the broadcasting program included in the signal through the signal received by the received signal apparatus will be described with reference to FIG. 3.

FIG. 3 is a flowchart of reproducing the received signal according to the exemplary embodiment of the present invention.

As shown in FIG. 3, the RF broadcasting signal transmitted from the signal transmitting apparatus 100 is received in the receiver 210 (S100). The RF broadcasting signal received in the receiver 210 performs the demodulation in the demodulator 220 by using any one of the B mode or Q mode only AT-DMB receiving apparatuses (S110).

When the RF broadcasting signal is demodulated in the demodulator 220, the first main service channel data and the first fast information channel data are separated. At this time, the hierarchical modulation mode value is inserted into the first fast information channel data. This is one value that is inserted from the enhancement layer FIC generator 140 of the signal transmitting apparatus. A method of inserting the hierarchical modulation mode value into the fast information channel data in the enhancement layer FIC generator 140 is already known, and therefore only the detailed description of the exemplary embodiment of the present invention will be described.

The first fast information channel data output from the demodulator 220 is channel-decoded and descrambled in the second channel decoder 241 and the second descrambler 242, and are separated into the fast information channel data of the base layer and the fast information channel data of the enhancement layer and output (S120). Among those, the fast information channel data of the enhancement layer are first input to the hierarchical modulation mode extractor 260, and the hierarchical modulation mode extractor 260 analyzes the fast information channel data of the enhancement layer to extract the hierarchical modulation mode value (S130).

The hierarchical modulation mode extractor 260 transmits the extracted hierarchical modulation mode value to the demodulator 220, and the demodulator 220 performs the accurate demodulation function based on the hierarchical modulation mode value (S140). By performing the demodulation function, the second main service channel data and the second fast information channel data are obtained, and then the second main service channel data is transmitted to the first signal processor 230 and the second fast information channel data is transmitted to the second signal processor 240 (S150).

The second main service channel data pass through the time deinterleaver 231, the first channel decoder 232, and the first descrambler 233, and are subjected to the deinterleaving, decoding, and descrambling processes and then transmitted to the demultiplexer 250. In addition, the second fast information channel data perform the channel decoding and the descramble function in the second channel decoder 241 and the second descrambler 242, which are in turn transmitted to the FIC analyzer 243. The fast information channel data analyzer 243 analyzes the second fast information channel data to extract the fast information channel data information and transmits the extracted information to the demultiplexer 250 (S160).

The demultiplexer 250 demultiplexes the main service channel data of the base layer and the main service channel data of the enhancement layer into each service, in which several services output from the first descrambler 233 are multiplexed, based on the fast information channel data information analyzed in the fast information channel data analyzer 243 (S170). In addition, when the broadcasting service is determined in the demultiplexer 250 by the selection of the viewer, the determined service information is transmitted to the decoder 270. The decoding process is performed in the decoder 270 based on the service information received from the demultiplexer 250, which is in turn reproduced as the broadcasting program in the player 280 (S180).

According to an embodiment of the present invention, even when there is no specific signaling information of the base layer broadcasting signal in the AT-DMB signals transmitted from the signal transmitting apparatus, only a minimum of signaling information is transmitted to the enhancement layer such that the function of the signal receiving apparatus is enhanced, thereby making it possible to receive the AT-DMB signal having good receiving quality.

The above-mentioned exemplary embodiments of the present invention are not embodied only by an apparatus and method. Alternatively, the above-mentioned exemplary embodiments may be embodied by a program performing functions that correspond to the configuration of the exemplary embodiments of the present invention, or a recording medium on which the program is recorded. These embodiments can be easily devised from the description of the above-mentioned exemplary embodiments by those skilled in the art to which the present invention pertains.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A signal receiving apparatus, comprising:
a demodulator that demodulates broadcasting signals transmitted from a signal transmitting apparatus and separates and outputs them into first main service channel data and first fast information channel data, and demodulates the broadcasting signals again based on a hierarchical modulation mode value extracted from first fast information channel data and separates and outputs them into second main service channel data and second fast information channel data;
a fast information channel data signal processor that processes the first fast information channel data output from the demodulator and outputs the fast information channel data of a first layer and the fast information channel data of a second layer; and
a hierarchical modulation mode extractor that extracts a hierarchical modulation mode value from the second layer fast information channel data of the second layer output from the signal processor and transmits it to the demodulator.

2. The signal receiving apparatus of claim 1, wherein
the fast information channel data signal processor includes:
a channel decoder that channel-decodes the first fast information channel data;
a descrambler that descrambles the channel-decoded first fast information channel data and classifies it into the fast information channel data of the first layer and the fast information channel data of the second layer; and
a fast information channel analyzer that receives the fast information channel data of the first layer and the fast information channel data of the second layer and generates and outputs the fast information channel data information.

3. The signal receiving apparatus of claim 2, further comprising:
a main service channel data signal processor that processes the second main service channel data and outputs it as the main service channel data of the first layer and the main service channel data of the second layer;
a demultiplexer that demultiplexes the first layer main service channel data of the first layer and the main service channel data of the second layer into service data, respectively, by using the fast information channel data information, and outputs any one of the service data based on service selection information input from the outside;
a decoder that decodes and outputs the service data from the demultiplexer; and
a player that reproduces service data decoded in the decoder as a broadcasting program and outputs them.

4. The signal receiving apparatus of claim 3, wherein
the main service channel data signal processor includes:
a time deinterleaver that receives the second main service channel data from the demodulator and performs time deinterleaving;
a channel decoder that decodes the second main service channel data that is subjected to the time deinterleaving and outputs them as the service channel data of the first layer and the service channel data of the second layer; and
a descrambler that descrambles the service channel data of the base layer and the service channel data of the enhancement layer.

5. The signal receiving apparatus of claim 4, wherein
the first layer is a base layer and the second layer is an enhancement layer.

6. The signal receiving apparatus of one of claims 1 to 5, wherein
the hierarchical modulation mode value is included in the fast information channel data of the enhancement layer,

7. A signal receiving method, comprising:
demodulating a broadcasting signal transmitted from a signal transmitting apparatus into first main service channel data and first fast information channel data;
extracting a hierarchical modulation mode value by analyzing the first fast information channel data;
demodulating the broadcasting signal into the second main service channel data and the second fast information channel data by using the hierarchical modulation mode value;
extracting fast information channel data information from the second fast information channel data;
generating a plurality of broadcasting services by demultiplexing the service channel data of the base layer and the service channel data of the enhancement layer output from the second fast information channel data using the fast information channel data information; and
selecting one of the plurality of generated broadcasting services and reproducing it as a broadcasting program.

8. The signal receiving method of claim 7, wherein
the extracting the hierarchical modulation mode value includes:
channel-decoding the first fast information channel data;
outputting the fast information channel data of the base layer and the fast information channel data of the enhancement layer by descrambling the channel-decoded first fast information channel data; and
extracting a hierarchical modulation mode value from the fast information channel data of the enhancement layer.

9. The signal receiving method of claim 7, wherein
the extracting the fast information channel data information includes:
performing time deinterleaving on the second main service channel data;
outputting the plurality of service channel data of the base layer and the service channel data of the enhancement layer by channel-decoding the time deinterleaved second main service channel data; and
descrambling the plurality of service channel data of the base layer and the service channel data of the enhancement layer.

10. The signal receiving method of claim 9, wherein
the extracting the fast information channel data information further includes:
channel-decoding the second fast information channel data;
outputting the fast information channel data of the base layer and fast information channel data of the enhancement layer by descrambling the channel-decoded second fast information channel data; and
generating the fast information channel data information by analyzing the fast information channel data of the base layer and the fast information channel data of the enhancement layer, respectively.
